# EUROPÄISCHE PATENTSCHRIFT

(11) **EP 1 343 602 B1**
(45) Veröffentlichungstag und Bekanntmachung des Hinweises auf die Patenterteilung: **14.07.2004**
(21) Anmeldenummer: 01988049.1
(22) Anmeldetag: 19.12.2001
(51) Int. Cl.: B23B 31/107

(54) **VORRICHTUNG ZUR VERBINDUNG ZWEIER BAUTEILE**
DEVICE FOR CONNECTING TWO COMPONENTS
DISPOSITIF POUR RELIER DEUX ELEMENTS

(30) Priorität: 22.12.2000 DE 10064705
(43) Veröffentlichungstag der Anmeldung: 17.09.2003
(73) Patentinhaber: KOMET Präzisionswerkzeuge Robert Breuning GmbH, D-74354 Besigheim (DE)
(72) Erfinder: STOLZ, Gerhard, 74379 Ingersheim (DE); STAHL, Frank, 71385 Pleidelsheim (DE)
(74) Vertreter: Wolf, Eckhard, Dr.-Ing.
(86) Internationale Anmeldenummer: PCT/EP2001/015084
(87) Internationale Veröffentlichungsnummer: WO 2002/051572

(56) Entgegenhaltungen:
- DE-C- 3 739 710
- US-A- 4 755 077
- US-A- 4 895 474

## Beschreibung

Die Erfindung betrifft eine Vorrichtung zur Verbindung zweier Bauteile insbesondere zweier Werkzeugteile, mit einem am ersten Bauteil angeordneten zylindrischen Paßzapfen und mit einer den Paßzapfen an dessen Wurzel umgebenden, radial überstehenden Ringfläche, mit einer im zweiten Bauteil angeordneten zylindrischen Paßbohrung zur Aufnahme des Paßzapfens und mit einer die Paßbohrung an deren Rand umgebenden Ringfläche, mit einem mit einer zylindrischen Führungsfläche in einer Querbohrung des Paßzapfens verschiebbar geführten, an seinen stimseitigen Enden einen zur Führungsfläche konzentrischen Innen- oder Außenkonus aufweisenden Klemmbolzen, dessen Länge kleiner als der Durchmesser des Paßzapfens im Bereich der Querbohrung ist, und mit zwei in im Bereich der Paßbohrung einander diametral gegenüberliegende, vorzugsweise mit einem Innengewinde versehenen Radialbohrung eingesetzten, einen nach dem Inneren der Paßbohrung weisenden, zum Innen- bzw. Außenkonus des Klemmbolzens komplementären Außen- oder Innenkonus aufweisenden, beim Spannvorgang keilartig mit dem Klemmbolzen verspannbaren Halteorganen, wobei die zueinander komplementären Innen- und Außenkonen paarweise einen beim Spannvorgang den Einzug des Paßzapfens in die Paßbohrung und ein gegenseitiges Anpressen der beiden Ringflächen bewirkenden Achsversatz aufweisen. Eine Vorrichtung zur Verbindung zweier Bauteile gemäß Oberbegriff von Patentanspruch 1 ist z.B. aus US-A-4 755 077 bekannt.

Bei einer bekannten Vorrichtung dieser Art (EP-B 0547049) ist das eine Ende des Klemmbolzens als Innenkonus und das andere als Außenkonus ausgebildet. Das eine Halteorgan ist als im zweiten Bauteil fixierte Anschlagschraube ausgebildet, die einen mit dem Außenkonus des Klemmbolzens zusammenwirkenden Innenkonus aufweist, während das andere Halteorgan als Bewegungsschraube ausgebildet ist, die einen in den Innenkonus des Klemmbolzens eingreifenden Außenkonus aufweist. Kommt es beim Eindrehen der Bewegungsschraube zur Anlage, so treten die dadurch eingeleiteten Kräfte zunächst auf der Seite der Bewegungsschraube auf. Der Klemmbolzen wird dabei zuerst bewegungsschraubenseitig gegen den dem Paßzapfenende zugewandten Querbohrungsgrund so angedrückt, daß der Paßzapfen in die Paßbohrung eingezogen wird. Unmittelbar danach erfolgt dies auch beim Auflaufen des Klemmbolzen-Außenkonus auf den Innenkonus der gegenüberliegenden Anschlagschraube. Sobald eine gewisse Spannwirkung eingetreten ist, erfolgt die Umsetzung der Radialkräfte in eine die Ringflächen des ersten und zweite Bauteils gegeneinanderpressende Axialkomponente. Ein Teil des über die Bewegungsschraube eingebrachten Drehmoments wird allerdings dazu verwendet, um die Reibung des Klemmbolzens in der Querbohrung zu überwinden, so daß die Ringflächen auf der Seite der Bewegungsschraube mit einer größeren Radialkraft gegeneinander gepreßt werden als auf der Seite der Anschlagschraube. Dadurch erhält man auf der Seite der Bewegungsschraube eine höhere Steifigkeit als auf der Seite der Anschlagschraube in Biegerichtung. Beim Spannvorgang wird auf den Querbolzen ein Kippmoment ausgeübt, das bei einer kürzeren Führungsfläche eher zu einer Kantenpressung führt als bei längeren Führungsflächen. Je länger die Führung also ist, desto weniger kann sich der Klemmbolzen verkanten und desto geringer sind die zu überwindenden Reibkräfte.

Ausgehend hiervon liegt der Erfindung die Aufgabe zugrunde, die bekannte Verbindungsvorrichtung der eingangs angegebenen Art dahingehend zu verbessern, daß das beim Spannvorgang erzeugte Drehmoment innerhalb der Verbindungsvorrichtung besser und über den Umfang gesehen gleichförmiger in die Planflächenverspannung umgesetzt wird.

Zur Lösung dieser Aufgabe werden die in den Ansprüchen 1, 4, 6, 14, 19, 21, 27 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt vor allem die Erkenntnis zugrunde, daß die einander zugewandten komplementären Außen- und Innenkonen im Anlagebereich nicht über ihre gesamte Länge gegeneinander angepreßt werden, sondern nur über ein relativ kurzes Stück. Um den Paßzapfen des ersten Bauteils in die Paßbohrung des zweiten Bauteils einführen zu können ist es notwendig, daß der Klemmbolzen einschließlich Außenkonus geringfügig kürzer als der Durchmesser des Paßzapfens im Bereich der Querbohrung ist. Die Abstützlänge des Klemmbolzens innerhalb der Querbohrung soll andererseits gemäß der Erfindung optimiert werden.

Dies kann dadurch erreicht werden, daß vor allem der Außenkonus des Klemmbolzens verkürzt wird. Um dies zu ermöglichen, wird gemäß einer ersten Lösungsvariante der Erfindung vorgeschlagen, daß der Klemmbolzen mindestens einen stirnseitig überstehenden kegelstumpfförmigen Außenkonus aufweist, dessen Basisdurchmesser kleiner als der Durchmesser der Führungsfläche ist. Vorteilhafterweise ist der Basisdurchmesser des Außenkonus maximal 85 %, vorzugsweise 60 bis 75 % des Durchmessers der Führungsfläche. Mit dieser Maßnahme wird erreicht, daß auch die Höhe des kegelstumpfförmigen Außenkonus maximal 40 %, vorzugsweise 10 bis 30 % des Durchmesser der Führungsfläche gewählt werden kann, so daß insgesamt ein verkürzter Außenkonus und eine entsprechend längere Führungsfläche erhalten wird.

Gemäß einer alternativen oder vorteilhaften Ausgestaltung der Erfindung weist der Klemmbolzen mindestens einen kegelstumpfförmigen Innenkonus auf, dessen Basisdurchmesser mindestens 65 %, vorteilhafterweise 70 bis 90 % des Führungsdurchmesser beträgt. Zusätzlich ist es von Vorteil, wenn die Höhe des kegelstumpfförmigen Innenkonus maximal 30 %, vorzugsweise 10 bis 25 % des Führungsdurchmessers beträgt.

Auch auf der Seite der Halteorgane ergibt sich die Möglichkeit einer Verkürzung der Außen- und Innenkonen. Dementsprechend wird gemäß einer bevorzugten Ausgestaltung der Erfindung vorgeschlagen, daß eines der beiden Halteorgane, das vorzugsweise als Anschlagschraube ausgebildet ist, einen kegelstumpfförmigen Innenkonus aufweist, dessen Höhe maximal 30 %, vorzugsweise 10 bis 25 % ihres Gewindedurchmessers beträgt. in diesem Falle ist es außerdem möglich, daß in der betreffenden Halteschraube der Basisdurchmesser des Innenkonus mindesten 70 %, vorzugsweise 75 bis 90 % seines Außen- oder Gewindedurchmessers beträgt.

Andererseits ist eines der beiden Halteorgane, das vorzugsweise als Bewegungsschraube ausgebildet ist, mit einem kegelstumpfförmigen Außenkonus versehen, dessen Höhe maximal 40 %, vorzugsweise 10 bis 30 % seines Außen- oder Gewindedurchmessers beträgt, während der Stumpfdurchmesser mindestens 40 %, vorzugsweise 50 bis 60 % des Außen- oder Gewindedurchmessers beträgt. Unter dem Stumpfdurchmesser ist dabei der kleinste Durchmesser und unter dem Basisdurchmesser der größte Durchmesser eines Kegelstumpfs zu verstehen.

Eine weitere alternative oder vorteilhafte Ausgestaltung der Erfindung sieht vor, daß der Klemmbolzen mindestens einen stirnseitig überstehenden kegelstumpfförmigen Außenkonus aufweist, dessen Stumpfdurchmesser mindestens dem 0,4-fachen des zugehörigen Basisdurchmessers entspricht. Der Stumpfdurchmesser des am Klemmbolzen angeformten Außenkonus entspricht vorteilhafterweise dem 0,6- bis 0,9-fachen des zugehörigen Basisdurchmessers.

Eine weitere bevorzugte Ausgestaltung der Erfindung sieht vor, daß der Klemmbolzen mindestens einen stimseitig angeordneten, kegelstumpfförmigen Innenkonus ausweist, dessen Stumpfdurchmesser mindestens dem 0,5-fachen, vorzugsweise dem 0,6- bis 0,8-fachen des zugehörigen Basisdurchmessers entspricht.

Andererseits wird gemäß der Erfindung vorgeschlagen, daß eines der vorzugsweise als Anschlagschraube ausgebildeten Halteorgane einen kegelstumpfförmigen Innenkonus aufweist, dessen Stumpfdurchmesser mindestens dem 0,6-fachen, vorzugsweise dem 0,75- bis 0,95-fachen des zugehörigen Basisdurchmessers entspricht. Weiter ist es von Vorteil, wenn eines der vorzugsweise als Bewegungsschraube ausgebildeten Halteorgane einen kegelstumpfförmigen Außenkonus aufweist, dessen Stumpfdurchmesser mindestens dem 0,4-fachen, vorzugsweise dem 0,5- bis 0,8-fachen des zugehörigen Basisdurchmesser entspricht.

Mit den vorstehenden Maßnahmen wird erreicht, daß die Führungsfläche, mit der der Klemmbolzen gegen die Innenfläche der Querbohrung reibend anliegt, in ihrer Länge optimiert werden kann. Dadurch werden die zu überwindenden Reibkräfte minimiert und die Flächenanpressung im Bereich der Ringflächen über den Umfang gesehen verbessert.

Um dies weiter zu verbessern wird gemäß einer alternativen oder vorteilhaften Ausgestaltung der Erfindung vorgeschlagen, daß eines der Halteorgane als am zweiten Bauteil festgelegter Anschlagbolzen und das andere Halteorgan als beim Spannvorgang betätigbare Bewegungsschraube ausgebildet ist, und daß die zueinander komplementären Innen- und Außenkonen auf der Seite des Anschlagbolzens einen kleineren Konuswinkel aufweisen als auf der Seite der Bewegungsschraube. Gemäß einer bevorzugten Ausgestaltung der Erfindung betragen die Konuswinkel auf der Seite des Anschlagbolzens zwischen 40 und 80°, während sie auf der Seite der Bewegungsschraube 70 bis 120° betragen. Beim Spannvorgang wirken die ineinandergreifenden Innen- und Außenkonen als eine Art Keilgetriebe über die die Radialbewegung der Bewegungsschraube und des Klemmbolzens teilweise in die axiale Planflächenverspannung umgesetzt wird. Aufgrund der erfindungsgemäßen unterschiedlichen Konuswinkel auf der Seite der Bewegungsschraube und des Anschlagbolzens ergeben sich prozentual unterschiedliche Axialkomponenten: Mit dem kleineren Konuswinkel auf der Seite des Anschlagbolzens erhält man eine vergrößerte Axialkomponente und damit eine Kompensation der Reibverluste des Klemmbolzens innerhalb der Querbohrung.

Vorteilhafterweise münden die Innenkonen stumpfseitig in eine erweiterte Sacklochbohrung. Mit dieser Maßnahme ist es möglich, beim Spannvorgang die volle Höhe des Innenkonus ohne Verklemmungsgefahr auszunutzen.

Um zusätzlich die Reibverhältnisse in den Gewinden zu verbessern, wird gemäß einer weiteren bevorzugten oder alternativen Ausgestaltung der Erfindung vorgeschlagen, daß an mindestens eines der im zweiten Bauteil befindlichen Innengewinde sich zur Paßbohrung hin eine gewindefreie Führungs- und Abstützpartie für das betreffende, als Schraube ausgebildete Halteorgan anschließt. Damit ist vor allem im Bereich der paarweise ineinandergreifenden Innen- und Außenkonen eine exakte Führung und Abstützung der betreffenden Schraube gewährleistet. Außerdem läßt sich damit die Führungslänge der betreffenden Schraube vergrößern, mit dem Ergebnis, daß die Kippneigung der Schraube und damit die Reibung reduziert wird, mit dem Ergebnis, daß auch bei Verwendung eines Normalgewindes höhere Drehmomente in eine Planflächenverspannung umgesetzt werden können.

Eine weitere bevorzugte oder alternative Ausgestaltung der Erfindung sieht vor, daß eines der Halteorgane als Kopfbolzen ausgebildet ist, der auf seiner Kopfseite mit dem Innen- oder Außenkonus versehen ist und der von der Innenseite der Paßbohrung her in die zugehörige Radialbohrung einsetzbar ist. Mit dieser Maßnahme wird neben einem sicheren Sitz des Halteorgans eine verbesserte Kraftübertragung an den Übergangsstellen der Spannelemente ohne die Gefahr von Materialaufwürfen erreicht. in diesem Zusammenhang ist es besonders vorteilhaft, wenn der Kopfbolzen mit seinem gewindefrei ausgebildeten Schaft und/oder mit seinem Kopfteil in die vorzugsweise als Stufenbohrung ausgebildete Radialbohrung in einer Preßpassung eingesetzt ist. Grundsätzlich ist es jedoch auch hier möglich, daß der Kopfbolzen mit seinem ein Außengewinde tragenden Schaft in die als Gewindebohrung ausgebildete Radialbohrung eingedreht wird. Dabei ist es wichtig, daß der Kopfbolzen mit seinem zumindest teilweise zylindrischen und/oder konischen Kopfteil an einer hierzu komplementär geformten Wandpartie der Radialbohrung kraftschlüssig abgestützt ist.

im folgenden wird die Erfindung anhand der in der Zeichnung dargestellten Ausführungsbeispiele näher erläutert. Es zeigen
- Fig. 1: einen Längsschnitt durch eine Werkzeugkupplung mit Planflächenverspannung;
- Fig. 2: einen Querschnitt durch die Werkzeugkupplung nach Fig. 1;
- Fig. 3 a und b: einen Ausschnitt aus Fig. 1 mit dem erfindungsgemäßen Klemmbolzen und einen Klemmbolzen nach dem vorbekannten Stand der Technik;
- Fig. 4: einen Längsschnitt durch eine gegenüber Fig. 1 abgewandelte Werkzeugkupplung mit Planflächenverspannung.

Die in der Zeichnung dargestellten Verbindungsvorrichtungen dienen zur lösbaren Kupplung von Bauteilen. Unter "Bauteilen" sollen vorstehend und nachstehend vor allem Werkzeugteile verstanden werden, die entweder einen Paßzapfen oder eine Paßbohrung enthalten, also insbesondere Werkzeugköpfe, Werkzeugschäfte, Adapterteile oder Zwischenelemente, wie Verlängerungs- und Reduzierungsteile, Verstellköpfe, Spindelvorsatzflansche und gegebenenfalls eine Maschinenspindel.

Die Verbindungsvorrichtung besteht im wesentlichen aus einem an einem ersten Bauteil 10 axial überstehenden Paßzapfen 12, einer in einem zweiten Bauteil 14 angeordneten Paßbohrung 16 und einem Spannmechanismus 18 zum Einziehen des Paßzapfens 12 in die Paßbohrung 16 sowie zur Erzeugung einer Planflächenverspannung zwischen der den Paßzapfen 12 umgebenden Ringfläche 22 des ersten Bauteils 10 und der die Paßbohrung 16 begrenzenden Ringfläche 24 des zweiten Bauteils 14.

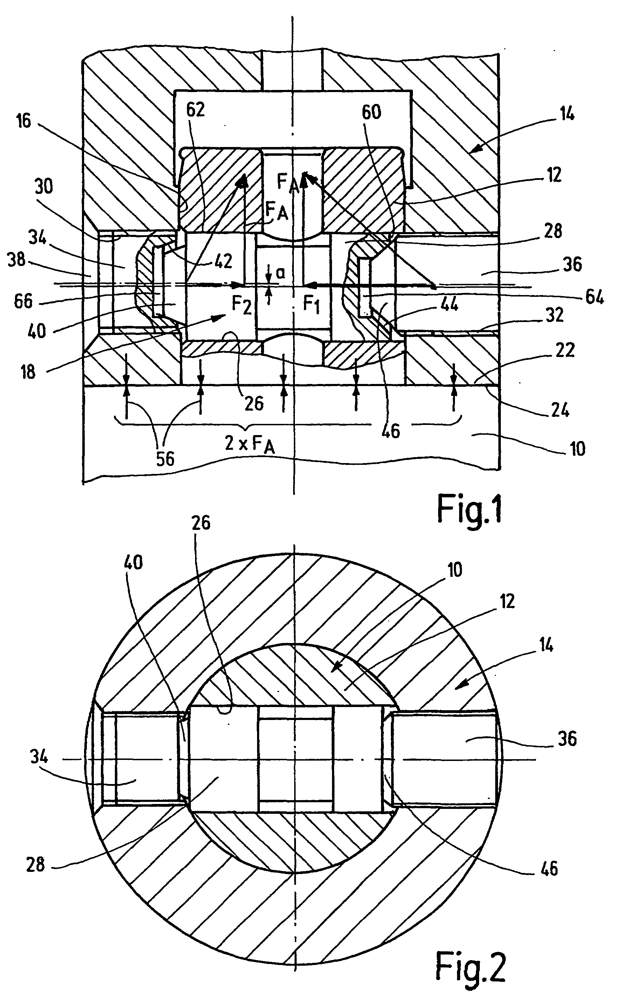

Der Spannmechanismus 18 enthält einen in einer Querbohrung 26 des Paßzapfens 12 verschiebbar angeordneten Klemmbolzen 28, sowie zwei in Radialbohrungen 30, 32 des zweiten Bauteils eingesetzte, einander diametral gegenüberliegende Halteorgane 34, 36. Das Halteorgan 34 nach Fig. 1 und 2 ist dabei als mit ihrem Senkkopf 38 am zweiten Bauteil 14 festgelegte Anschlagschraube ausgebildet, während das Halteorgan 36 eine Bewegungsoder Spannschraube bildet. Der Klemmbolzen 28 greift mit seinem Außenkonus 40 in einen Innenkonus 42 der benachbarten Anschagschraube 34 ein und weist an seinem dem Außenkonus 40 gegenüberliegenden Ende einen Innenkonus 44 zur Aufnahme eines an der Bewegungsschaube 36 angeformten Außenkonus 46 auf.

Zur Herstellung einer Verbindung zwischen den beiden Bauteilen 10, 14 wird zunächst der Paßzapfen 12 bei ausgedrehter Bewegungsschraube 36 lose in die Paßbohrung 16 des zweiten Bauteils 14 bis zum Anschlag der Ringflächen 22, 24 eingeführt. Beim anschließenden Eindrehen der Bewegungsschraube 36 in das Innengewinde 32 kommt es zunächst zum Anschlag zwischen der Bewegungsschraube 36 und dem Klemmbolzen 28 im Bereich der einander zugewandten Konusflächen 44, 46. In dem weiteren Verlauf des Spannvorgangs wird der Klemmbolzen 28 mit seinem Außenkonus 40 bis zum Anschlag gegen die Anschlagschraube 34 in den Innenkonus 42 eingeschoben. In diesem Zustand setzt der eigentliche Spannvorgang ein, bei welchem die durch die Halteschrauben 36, 34 eingeleiteten Spannkräfte F₁,F₂ über die konischen Anlageflächen aufgrund des Achsversatzes a den Paßzapfen 12 in die Paßbohrung 16 einziehenden Axialkräfte F_{A} umgesetzt werden. Die Axialkräfte F_{A} führen zu einer durch die Pfeile 56 angedeuteten Planflächenverspannung an den Ringflächen 22, 24 des ersten und des zweiten Bauteils 10, 14. Die Axialkräfte F_{A} werden dabei über den Klemmbolzen 28 im Bereich des dem Zapfenende 58 zugewandten Bohrungsgrundes 50 der Querbohrung 26 auf den Paßzapfen 12 und damit auf das erste Bauteil 10 übertragen. Andererseits müssen im Bereich der Halteschrauben 34, 36 die Spannkräfte über das jeweilige Innengewinde 30, 32 innerhalb der Wandung des zweiten Bauteils 14 aufgenommen und abgebaut werden.

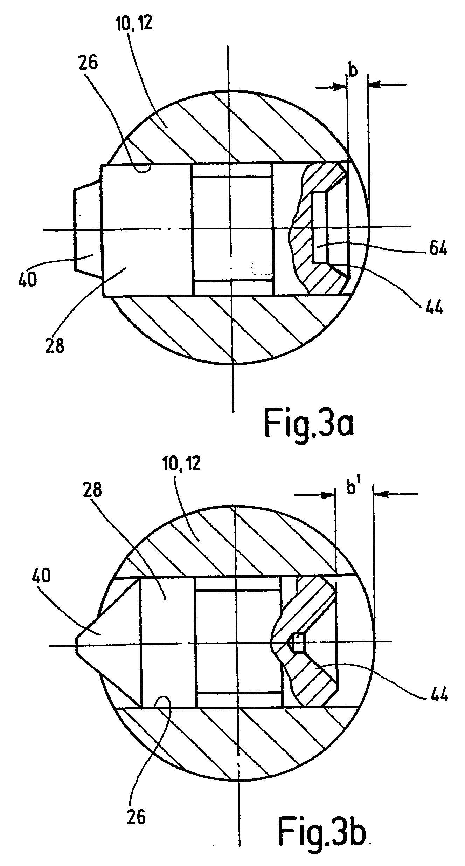

Wie ein Vergleich zwischen dem in Fig. 3 a gezeigten erfindungsgemäßen Klemmbolzen 28 und dem in Fig. 3 b gezeigten bekannten Klemmbolzen nach der EP-B 0547049 zeigt, besteht ein erheblicher Unterschied in der Länge der Außen- und Innenkonen 40, 44. Entsprechendes gilt für den Außenkonus 46 der Bewegungsschraube 36 und dem Innenkonus 42 der Anschlagschraube 34. Mit diesen Maßnahmen wird erreicht, daß die Länge der Führungsfläche 62 des Klemmbolzens 28 bei gegebenem Durchmesser des Paßzapfens um etwa 20 % vergrößert werden kann, mit dem Ergebnis, daß der Klemmbolzen 28 über eine größere Länge in der Querbohrung 26 abgestützt wird, so daß eine geringere Kippneigung und eine Reduzierung der zu überwindenden Reibkräfte entsteht.

Entsprechendes gilt für die Bewegungsschraube 36, deren Außenkonus 46 so kurz ist, daß ihr Schaft über eine größere Länge im Innengewinde 32 abgestützt wird. Dieser Effekt kommt in den Fig. 3 a und 3 b in dem Maß b, b' zum Ausdruck, das der Differenz der Spannschraubenauskragung im offenen und im gespannten Zustand zeigt. Der Verschiebeweg der Bewegungsschraube ist im Falle des erfindungsgemäßen Ausführungsbeispiels nach Fig. 3 a weniger als halb so groß als bei der bekannten Ausführungsform nach Fig. 3 b. Dies bedeutet, daß auch der Klemmbolzen beim Spannvorgang um eine entsprechend kürzere Verschiebestrecke b statt b' verschoben werden muß. Der kürzere Verschiebeweg führt dazu, daß in geringerem Maße Massen gegenüber dem geometrischen Mittelpunkt verschoben werden, die zu einer Unwucht führen könnten. Wegen des kleineren Verschiebewegs läßt sich die Wuchtsymmetrie im gespannten Zustand genauer als bisher einstellen, was besonders für hohe Maschinendrehzahlen von Bedeutung ist.

Wie insbesondere aus Fig. 1 und 3 zu ersehen ist, weist der stimseitig überstehende kegelförmige Außenkonus 40 des Klemmbolzens 28 einen Basisdurchmesser auf, der kleiner als der Durchmesser der Führungsfläche 62 ist. Bei dem gezeigten Ausführungsbeispiel beträgt der Basisdurchmesser des Außenkonus 40 etwa 70 % des Führungsdurchmessers, während die Höhe des kegelstumpfförmigen Außenkonus weniger als 20 % des Führungsdurchmessers beträgt. Die relative Kürze des Außenkonus kann auch durch das Verhältnis zwischen Stumpfdurchmesser (kleinster Durchmesser) und Basisdurchmesser (größter Durchmesser) eines Konus quantizifiert werden. Im Falle des Außenkonus 40 des Klemmbolzens 28 beträgt dieses Verhältnis 0,8 während es bei dem Außenkonus 46 der Spannschraube 0,5 beträgt. Ähnliche Werte ergeben sich auch bei den Innenkonen 42, 44, die ebenfalls eine relativ geringe Höhe aufweisen.

Ähnliche Werte ergeben sich aus einer Vermessung des Außenkonus 46 und der Innenkonen 42 und 44. Die Konusabschnitte, vor allem die Innenkonen werden so kurz gehalten, wie es für die tragende Länge notwendig ist. In axialer Richtung wird hinter dem tragenden Konusbereich der Innenkonen eine Freisparung 64, 66 vorgesehen, in die der Außenkonus beim Spannvorgang unter Berücksichtigung aller vorkommenden Maßschwankungen ohne Berührung eindringen kann.

Die Verkürzung der Außen- und Innenkonen führt auf der Seite der Bewegungsschraube 36 zu dem Vorteil, daß man dort eine größere Führungslänge im Gewindebereich erhält. Wenn bisher nur ca. 2/3 bis 3/4 der Gewindelänge genutzt werden konnten, steht hierfür jetzt die gesamte Gewindelänge zur Führung zur Verfügung.

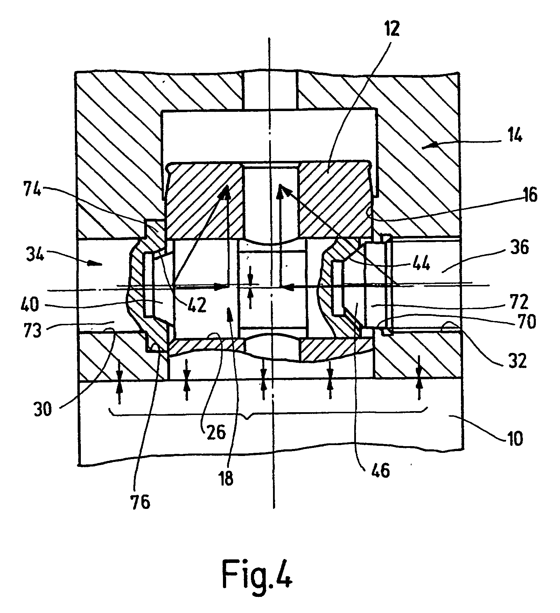

Eine weitere Verbesserung der Führungseigenschaften im Bereich der Bewegungsschraube 36 kann erzielt werden, wenn das der Paßbohrung zugewandte Ende der Radialbohrung 32 als gewindefreie Führungsbohrung 70 gestaltet wird und die Bewegungsschraube 36 einen entsprechenden gewindefreien Führungsabschnitt 72 aufweist (vgl. Fig. 4). Die gewindefreien Abschnitte sorgen dafür, daß die Bewegungsschraube im kritischen Bereich der Konusaufnahme mit geringerem Passungsspiel geführt werden und das Gewinde überwiegend eine Spannfunktion in Axialrichtung erhält.

Eine weitere Besonderheit der Erfindung besteht darin, daß der Kegelwinkel (Öffnungswinkel) der zueinander komplementären Konen auf der Seite der Bewegungsschraube 36 größer ist als auf der Seite der Anschlagschraube 34. Dies führt dazu, daß auf der Seite der Anschlagschraube 34 ein größerer Teil der Spannkraft F₂ in die Axialkomponente F_{A} umgesetzt wird als auf der Seite der Bewegungsschraube 36 (Spannkraft F₁, Axialkraft F_{A}). Mit dieser Maßnahme werden die beim Spannvorgang im Bereich der Querbohrung 26 auftretenden Reibungsverluste, die zu einer gegenüber der Spannkraft F₁ kleineren Reaktionskraft F₂ führen, kompensiert, so daß die Planflächenverpressung 56 über den Umfang vergleichsmäßigt wird.

Das Ausführungsbeispiel nach Fig. 4 unterscheidet sich von dem Ausführungsbeispiel nach Fig. 1 einmal dadurch, daß auf der Seite der Bewegungsschraube ein gewindefreier Abschnitt 72 in einen gewindefreien Teil 70 der Radialbohrung 32 geführt ist. Weiter ist bei diesem Ausführungsbeispiel das Halteorgan 34 als Kopfbolzen ausgebildet, der auf seiner Kopfseite mit dem Innenkonus 42 versehen ist und der mit seinem Schaft 73 von der Innenseite der Paßbohrung 16 her in die Radialbohrung 30 entweder eingeschraubt oder unter Bildung einer Preßpassung eingepreßt ist. Der Kopfteil 74 des Kopfbolzens 34 weist bei dem gezeigten Ausführungsbeispiel eine zylindrische Mantelfläche auf und ist in einer hierzu komplementär geformten Wandpartie 76 der als Stufenbohrung ausgebildeten Radialbohrung 30 kraftschlüssig abgestützt.

Zusammenfassend ist folgendes festzuhalten: Die Erfindung bezieht sich auf eine Vorrichtung zur Verbindung zweier Bauteile 10, 12, beispielsweise zweier Werkzeugteile. Das erste Bauteil 10 weist dabei einen zylindrischen Paßzapfen 12 sowie eine radial über diesen Paßzapfen 12 überstehende Ringfläche 22 auf, während das zweite Bauteil eine zylindrische Paßbohrung 16 zur Aufnahme des Paßzapfens 12 sowie eine die Paßbohrung 16 umgebende Ringfläche 24-aufweist. Weiter ist ein Spannmechanismus 18 vorgesehen, der beim Spannvorgang dafür sorgt, daß der Paßzapfen 12 in die Paßbohrung eingezogen wird und dabei die Ringflächen 22, 24 gegeneinander gepreßt werden. Der Spannmechanismus 18 enthält einen in einer Querbohrung 26 des Paßzapfens 12 verschiebbar angeordneten Klemmbolzen 28 sowie zwei im zweiten Bauteil 14 einander diametral gegenüberliegende Halteorgane 34, 36, die mit je einem stirnseitigen Innen- bzw. Außenkonus gegen einen komplementären Außen- bzw. Innenkonus des Klemmbolzens 28 anliegen und beim Spannvorgang keilartig mit diesem verspannt werden. Erfindungsgemäß weist der Klemmbolzen 28 einen kegelstumpfförmigen Außenkonus 40 auf, dessen Basisdurchmesser kleiner als der Durchmesser seiner Führungsfläche 62 in der Querbohrung 26 ist.

## Patentansprüche

1. Vorrichtung zur Verbindung zweier Bauteile, insbesondere zweier Werkzeugteile, mit einem am ersten Bauteil (10) angeordneten zylindrischen Paßzapfen (12) und mit einer den Paßzapfen (12) an dessen Wurzel umgebenden, radial überstehenden Ringfläche (22), mit einer im zweiten Bauteil (14) angeordneten zylindrischen Paßbohrung (16) zur Aufnahme des Paßzapfens (12) und mit einer die Paßbohrung an deren Rand umgebenden Ringfläche (24), mit einem mit einer zylindrischen Führungsfläche (62) in einer Querbohrung (26) des Paßzapfens (12) verschiebbar geführten, an seinen stimseitigen Enden einen zur Führungsfläche (62) konzentrischen Innen- oder Außenkonus (44, 40) aufweisenden Klemmbolzen (28), dessen Länge kleiner als der Durchmesser des Paßzapfens (12) im Bereich der Querbohrung (26) ist, und mit zwei in im Bereich der Paßbohrung (16) einander diametral gegenüberliegende, vorzugsweise mit einem Innengewinde versehenen Radialbohrung (30, 32) eingesetzten, einen nach dem Inneren der Paßbohrung (16) weisenden, zum Innen- bzw. Außenkonus (44, 40) des Klemmbolzens (28) komplementären Außen- oder Innenkonus (46. 42) aufweisenden, beim Spannvorgang keilartig mit dem Klemmbolzen (28) verspannbaren Halteorganen (34, 36). wobei die zueinander komplementären Innen- und Außenkonen (42, 40; 44, 46) paarweise einen beim Spannvorgang den Einzug des Paßzapfens (12) in die Paßbohrung (16) und gegenseitiges Anpressen der Ringflächen (22, 24) bewirkenden Achsversatz (a) aufweisen, und wobei eines der Halteorgane als am zweiten Bauteil (14) festgelegter Anschlagbolzen und das andere Halteorgan als beim Spannvorgang betätigbare Bewegungsschraube (36) ausgebildet ist, **dadurch gekennzeichnet, daß** die zueinander komplementären Innen- und Außenkonen (42, 40; 44, 46) auf der Seite des Anschlagbolzens (34) einen kleineren Konuswinkel aufweisen als auf der Seite der Bewegungsschraube (36).

2. Vorrichtung nach Anspruch 1, **dadurch gekennzeichnet, daß** die Konuswinkel auf der Seite des Anschlagbolzens (34) 40° bis 80° und auf der Seite der Bewegungsschraube (36) 70 bis 120° betragen.

3. Vorrichtung nach Anspruch 1 oder 2, **dadurch gekennzeichnet, daß** die Innenkonen (42, 44) an ihrer Stumpfseite in eine erweiterte Freisparung (64, 66) münden.

4. Vorrichtung nach einem der Ansprüche 1 bis 3, **dadurch gekennzeichnet, daß** an mindestens eines der im zweiten Bauteil (14) befindlichen Innengewinde (30, 32) sich zur Paßbohrung (16) hin eine gewindefreie Führungs- und Abstützpartie für das betreffende, als Schraube ausgebildete Halteorgan (34, 36) anschließt.

5. Vorrichtung nach Anspruch 4, **dadurch gekennzeichnet, daß** das als Schraube ausgebildete Halteorgan (34, 36) mit einem gewindefreien Schaftabschnitt in die Führungs- und Abstützpartie eingreift.

6. Vorrichtung nach einem der Ansprüche 1 bis 5, **dadurch gekennzeichnet, daß** eines der Halteorgane (34) als Kopfbolzen ausgebildet ist, der auf seiner Kopfseite mit dem Innen- oder Außenkonus (42) versehen ist und der von der Innenseite der Paßbohrung (16) her in die zugehörige Radialbohrung (30) einsetzbar ist.

7. Vorrichtung nach Anspruch 6, **dadurch gekennzeichnet, daß** der Kopfbolzen (34) mit seinem gewindefrei ausgebildeten Schaft (73) und/oder mit seinem Kopfteil (74) in die vorzugsweise als Stufenbohrung ausgebildete Radialbohrung (30) eingepreßt ist.

8. Vorrichtung nach Anspruch 6, **dadurch gekennzeichnet, daß** der Kopfbolzen (34) mit seinem ein Außengewinde tragenden Schaft in die als Gewindebohrung ausgebildeter Radialbohrung (30) eingedreht ist.

9. Vorrichtung nach einem der Ansprüche 6 bis 8, **dadurch gekennzeichnet, daß** der Kopfbolzen (34) mit seinem zumindest teilweise zylindrischen und/oder konischen Kopfteil (74) an einer hierzu komplementär geformten Wandpartie (76) der Radialbohrung (30) kraftschlüssig abgestützt ist.

10. Vorrichtung nach einem der Ansprüche 1 bis 9, **dadurch gekennzeichnet, daß** der Klemmbolzen (28) mindestens einen kegelstumpfförmigen Innenkonus (44) aufweist, dessen Basisdurchmesser mindestens 65 % des Führungsdurchmessers (62) beträgt.

11. Vorrichtung nach Anspruch 10, **dadurch gekennzeichnet, daß** der Basisdurchmesser des Innenkonus (44) des Klemmbolzens (28) 70 bis 90 % des Führungsdurchmessers (62) beträgt.

12. Vorrichtung nach Anspruch 10 oder 11, **dadurch gekennzeichnet, daß** die Höhe des kegelstumpfförmigen Innenkonus (44) maximal 30 %, vorzugsweise 10 bis 25 % des Durchmessers der Führungsfläche (62) beträgt.

13. Vorrichtung nach einem der Ansprüche 1 bis 12, **dadurch gekennzeichnet, daß** der Klemmbolzen (28) einen stimseitig überstehenden kegelstumpfförmigen Außenkonus (40) aufweist, dessen Basisdurchmesser kleiner als der Durchmesser der Führungsfläche (62) ist.

14. Vorrichtung nach Anspruch 13, **dadurch gekennzeichnet, daß** der Basisdurchmesser des Außenkonus (40) maximal 85 %. vorzugsweise 60 bis 75 % des Durchmessers der Führungsfläche (62) beträgt.

15. Vorrichtung nach Anspruch 13 oder 14, **dadurch gekennzeichnet, daß** die Höhe des kegelstumpfförmigen Außenkonus (40) maximal 40 %, vorzugsweise 10 bis 30 % des Durchmessers der Führungsfläche (62) beträgt.

16. Vorrichtung nach einem der Ansprüche 1 bis 15, **dadurch gekennzeichnet, daß** eines der beiden Halteorgane, das vorzugsweise als Anschlagschraube (34) ausgebildet ist, einen kegelstumpfförmigen Innenkonus (42) aufweist, dessen Höhe maximal 30 %, vorzugsweise 10 bis 25 % ihres Gewindedurchmessers beträgt.

17. Vorrichtung nach einem der Ansprüche 1 bis 16, **dadurch gekennzeichnet, daß** eines der beiden Halteorgane, das vorzugsweise als Anschlagschraube (34) ausgebildet ist, einen kegelstumpfförmigen Innenkonus (42) aufweist, dessen Basisdurchmesser mindestens 70 %, vorzugsweise 75 bis 90 % seines Außen- oder Gewindedurchmessers beträgt.

18. Vorrichtung nach einem der Ansprüche 1 bis 17, **dadurch gekennzeichnet, daß** eines der beiden Halteorgane, das vorzugsweise als Bewegungsschraube (36) ausgebildet ist, einen kegelstumpfförmigen Außenkonus (46) aufweist, dessen Höhe maximal 40 %, vorzugsweise 10 bis 30 % seines Außen- oder Gewindedurchmessers beträgt.

19. Vorrichtung nach Anspruch 18, **dadurch gekennzeichnet, daß** der Stumpfdurchmesser das als Bewegungsschraube (36) ausgebildeten Halteorgans mindestens 40 %, vorzugsweise 50 bis 60 % des Außenoder Gewindedurchmessers beträgt.

20. Vorrichtung nach einem der Ansprüche 1 bis 19, **dadurch gekennzeichnet, daß** der Klemmbolzen (28) einen stimseitig überstehenden kegelstumpfförmigen Außenkonus (40) aufweist, dessen Stumpfdurchmesser mindestens dem 0,4-fachen des zugehörigen Basisdurchmessers entspricht.

21. Vorrichtung nach Anspruch 20, **dadurch gekennzeichnet, daß** der Stumpfdurchmesser des am Klemmbolzen (28) angeformten Außenkonus (40) dem 0,6- bis 0,9-fachen des zugehörigen Basisdurchmessers entspricht.

22. Vorrichtung nach einem der Ansprüche 1 bis 21, **dadurch gekennzeichnet, daß** der Klemmbolzen (28) mindestens einen stirnseitig angeordneten kegelstumpfförmigen Innenkonus (44) aufweist, dessen Stumpfdurchmesser mindestens dem 0,5-fachen, vorzugsweise dem 0,6- bis 0,8-fachen des zugehörigen Basisdurchmessers entspricht.

23. Vorrichtung nach einem der Ansprüche 1 bis 22, **dadurch gekennzeichnet, daß** eines der vorzugsweise als Anschlagschraube (34) ausgebildeten Halteorgane einen kegelförmigen Innenkonus (42) aufweist, dessen Stumpfdurchmesser mindestens dem 0,6-fachen, vorzugsweise dem 0,7- bis 0,95-fachen des zugehörigen Basisdurchmesser entspricht.

24. Vorrichtung nach einem der Ansprüche 1 bis 23, **dadurch gekennzeichnet, daß** eines der vorzugsweise als Bewegungsschraube (36) ausgebildeten Halteorgane einen kegelstumpfförmigen Außenkonus (46) aufweist, dessen Stumpfdurchmesser mindestens dem 0,4-fachen, vorzugsweise dem 0,5- bis 0,8-fachen des zugehörigen Basisdurchmessers entspricht.

## Claims

1. A device for connecting two components, in particular two tool parts, comprising a cylindrical fitting plug (12) arranged on the first component (10), and comprising a radially projecting annular surface (22) surrounding the fitting plug (12) at its root, comprising a cylindrical fitting bore (16) arranged in the second component (14) for receiving the fitting plug (12), and comprising an annular surface (24) surrounding the fitting bore at its edge, comprising a clamp bolt (28), which is movably guided with a cylindrical guide surface (62) in a transverse bore (26) in the fitting plug (12), and has on its axially facing ends an internal or external cone (44, 40) concentric with respect to said guide surface (62), and the length of which clamp bolt is smaller than the diameter of the fitting plug (12) in the area of the transverse bore (26), and comprising two retainers (34, 36), which are inserted into radial bores (30, 32), which are diametrically opposed in the area of the fitting bore (16) and are preferably provided with an internal thread, and which retainers have an external or internal cone (46, 42) extending toward the inside of the fitting bore (16) and being complementary with respect to the internal or external cone (44, 40) of the clamp bolt (28), and which retainers can be tensioned wedge-like with the clamp bolt (28) during the tensioning operation, whereby the internal and external cones (42, 40; 44, 46), which are complementary with respect to one another, have in pairs an axial shift (a) causing during the tensioning operation the pulling of the fitting plug (12) into the fitting bore (16) and a mutual pressing of the annular surfaces (22, 24) against one another, and whereby one of the retainers is designed as a stop bolt fixed on the second component (14), and the other retainer as a motion screw (36) operable during the tensioning operation, wherein the internal and external cones (42, 40; 44, 46), which are complementary to one another have on the side of the stop bolt (34) a smaller cone angle than on the side of the motion screw (36).

2. The device according to Claim 1, wherein the cone angles on the side of the stop bolt (34) are 40° to 80° and on the side of the motion screw (36) 70 to 120°.

3. The device according to Claim 1 or 2, wherein the internal cones (42, 44) end at their frustum side in an enlarged recess (64, 66).

4. The device according to one of the Claims 1 to 3, wherein at least one of the internal threads (30, 32), which is provided in the second component (14), is followed toward the fitting bore (16) by a threadless guiding and supporting portion for the respective retainer (34, 36) designed as a screw.

5. The device according to Claim 4, wherein the retainer (34, 36) designed as a screw engages with a threadless shaft section the guiding and supporting portion.

6. The device according to one of the Claims 1 to 5, wherein one of the retainers (34) is designed as a head bolt, which has on its head side an internal or external cone (42), and which can be inserted from the inside of the fitting bore (16) into the associated radial bore (30).

7. The device according to Claim 6, wherein the head bolt (34) with its shaft (73), which is designed threadless, and/or with its head part (74) is pressed into the radial bore (30) preferably designed as a stepped bore.

8. The device according to Claim 6, wherein the head bolt (34) with its shaft having an external thread is screwed into the radial bore (30) designed as a taphole.

9. The device according to one of the Claims 6 to 8, wherein the head bolt (34) with its at least partially cylindrical and/or conical head part (74) is force-lockingly supported on a wall portion (76) of the radial bore (30), which wall portion (76) is formed complementarity to said head portion.

10. The device according to one of the Claims 1 to 9, wherein the clamp bolt (28) has at least one frustum-shaped internal cone (44), the base diameter of which is at least 65% of the guide diameter (62).

11. The device according to Claim 10, wherein the base diameter of the internal cone (44) of the clamp bolt (28) is 70 to 90% of the guide diameter (62).

12. The device according to Claim 10 to 11, wherein the height of the frustum-shaped internal cone (44) is at a maximum 30%, preferably 10 to 25%, of the diameter of the guide surface (62).

13. The device according to one of the Claims 1 to 12, wherein the clamp bolt (28) has a frustum-shaped external cone (40) projecting beyond the axially facing end, the base diameter of which external cone is less than the diameter of the guide surface (62).

14. The device according to Claim 13, wherein the base diameter of the external cone (40) is at a maximum 85%, preferably 60 to 75%, of the diameter of the guide surface (62).

15. The device according to Claim 13 or 14, wherein the height of the frustum-shaped external cone (40) is at a maximum 40%, preferably 10 to 30%, of the diameter of the guide surface (62).

16. The device according to one of the Claims 1 to 15, wherein one of the two retainers, which is preferably designed as a stop screw (34), has a frustum-shaped internal cone (42), the height of which is at a maximum 30%, preferably 10 to 25%, of the thread diameter.

17. The device according to one of the Claims 1 to 16, wherein one of the two retainers, which is preferably designed as a stop screw (34), has a frustum-shaped internal cone (42), the base diameter of which is at least 70%, preferably 75 to 90%, of its external or thread diameter.

18. The device according to one of the Claims 1 to 17, wherein one of the two retainers, which is preferably designed as a motion screw (36), has a frustum-shaped external cone (46), the height of which is at a maximum 40%, preferably 10 to 30%, of its outside or thread diameter.

19. The device according to Claim 18, wherein the frustum diameter of the retainer designed as a motion screw (36) is at least 40%, preferably 50 to 60%, of the outside or thread diameter.

20. The device according to one of the Claims 1 to 19, wherein the clamp bolt (28) has a frustum-shaped external cone (40), which projects beyond the axially facing end and the frustum diameter of which corresponds to at least 0.4 times the associated base diameter.

21. The device according to Claim 20, wherein the frustum diameter of the external cone (40) formed on the clamp bolt (28) corresponds to 0.6 to 0.9 times the associated base diameter.

22. The device according to one of the Claims 1 to 21, wherein the clamp bolt (28) has at least one frustum-shaped internal cone (44) arranged on the axially facing end, the frustum diameter of which internal cone corresponds at least to 0.5 times, preferably to 0.6 to 0.8 times the associated base diameter.

23. The device according to one of the Claims 1 to 22, wherein one of the retainers preferably designed as a stop screw (34) has a conical internal cone (42), the frustum diameter of which corresponds at least to 0.6 times, preferably to 0.7 to 0.95 times the associated base diameter.

24. The device according to one of the Claims 1 to 23, wherein one of the retainers preferably designed as a motion screw (36), has a frustum-shaped external cone (46), the frustum diameter of which corresponds at least to 0.4 times, preferably to 0.5 to 0.8 times the associated base diameter.

## Revendications

1. Dispositif pour relier deux éléments, notamment deux parties d'outil, avec un tenon d'ajustement cylindrique (12) disposé sur le premier élément (10) et avec une face annulaire (22) dépassant radialement, entourant le tenon d'ajustement (12) à sa racine, avec un perçage d'ajustement cylindrique (16) disposé dans le deuxième élément (14) pour recevoir le tenon d'ajustement (12) et avec une face annulaire (24) entourant le perçage d'ajustement sur son bord, avec une goupille de serrage (28) guidée à coulissement, par une face de guidage cylindrique (62), dans un perçage transversal (26) du tenon d'ajustement (12), goupille qui présente à ses extrémités frontales un cône intérieur ou extérieur (44, 40) concentrique à la face de guidage (62), et goupille dont la longueur est inférieure au diamètre du tenon d'ajustement (12) dans la région du perçage transversal (26), et avec deux organes de maintien (34, 36) pouvant, lors du processus de serrage, être assemblés par serrage avec la goupille de serrage (28) à la manière de coins, organes qui sont insérés dans des perçages radiaux (30, 32) - diamétralement opposés dans la région du perçage d'ajustement (16) et de préférence dotés d'un filetage intérieur -, et qui présentent un cône extérieur ou intérieur (46, 42), tourné vers l'intérieur du perçage d'ajustement (16) et complémentaire du cône intérieur ou extérieur (44, 40) de la goupille de serrage (28), les cônes intérieurs et extérieurs mutuellement complémentaires (42, 40 ; 44, 46) présentant par paires un décalage axial (a) produisant, lors du processus de serrage, le rentrage du tenon d'ajustement (12) dans le perçage d'ajustement (16) et la pression l'une contre l'autre des faces annulaires (22, 24), et l'un des organes de maintien étant conçu comme goujon de butée fixé en position sur le deuxième élément (14) et l'autre comme vis de commande (36) pouvant être actionnée lors du processus de serrage, **caractérisé en ce que** les cônes intérieurs et extérieurs mutuellement complémentaires (42, 40 ; 44, 46) présentent un plus petit angle de cône du côté du goujon de butée (34) que du côté de la vis de commande (36).

2. Dispositif selon la revendication 1, **caractérisé en ce que** les angles de cône sont compris entre 40° et 80° du côté du goujon de butée (34), et entre 70° et 120° du côté de la vis de commande (36).

3. Dispositif selon la revendication 1 ou 2, **caractérisé en ce que** les cônes intérieurs (42, 44) débouchent, côté troncature, dans un évidement libre élargi (64, 66).

4. Dispositif selon l'une des revendications 1 à 3, **caractérisé en ce qu'**à au moins un des filetages intérieurs (30, 32) présents dans le deuxième élément (14) se raccorde, en direction du perçage d'ajustement (16), une partie non filetée de guidage et de soutien pour l'organe de maintien concerné (34, 36) réalisé sous forme de vis.

5. Dispositif selon la revendication 4, **caractérisé en ce que** l'organe de maintien (34, 36) réalisé sous forme de vis s'engage par une partie de tige non filetée dans la partie de guidage et de soutien.

6. Dispositif selon l'une des revendications 1 à 5, **caractérisé en ce que** l'un (34) des organes de maintien est réalisé sous forme de goujon à tête, qui est pourvu du cône intérieur ou extérieur (42) sur son côté de tête et qui peut être inséré depuis le côté intérieur du perçage d'ajustement (16) dans le perçage radial associé (30).

7. Dispositif selon la revendication 6, **caractérisé en ce que** le goujon à tête (34) est emmanché par sa tige (73) réalisée sans filetage et/ou par sa partie de tête (74) dans le perçage radial (30) réalisé de préférence sous forme de perçage échelonné.

8. Dispositif selon la revendication 6, **caractérisé en ce que** le goujon à tête (34) est vissé par sa tige portant un filetage extérieur dans le perçage radial (30) réalisé sous forme de perçage fileté.

9. Dispositif selon l'une des revendications 6 à 8, **caractérisé en ce que** le goujon à tête (34) s'appuie à force, par sa partie de tête (74) au moins partiellement cylindrique et/ou conique, contre une partie de paroi (76) de forme complémentaire du perçage radial (30).

10. Dispositif selon l'une des revendications 1 à 9, **caractérisé en ce que** la goupille de serrage (28) présente au moins un cône intérieur (44) en forme de cône tronqué, dont le diamètre de base est égal à au moins 65% du diamètre de guidage (62).

11. Dispositif selon la revendication 10, **caractérisé en ce que** le diamètre de base du cône intérieur (44) de la goupille de serrage (28) est compris entre 70 et 90% du diamètre de guidage (62).

12. Dispositif selon la revendication 10 ou 11, **caractérisé en ce que** la hauteur du cône intérieur tronconique (44) est égale à au plus 30%, et de préférence 10 à 25% du diamètre de la face de guidage (62).

13. Dispositif selon l'une des revendications 1 à 12, **caractérisé en ce que** la goupille de serrage (28) présente un cône extérieur tronconique (40) dépassant du côté frontal, dont le diamètre de base est inférieur au diamètre de la face de guidage (62).

14. Dispositif selon la revendication 13, **caractérisé en ce que** le diamètre de base du cône extérieur (40) est égal à au plus 85%, et de préférence 60 à 75% du diamètre de la face de guidage (62).

15. Dispositif selon la revendication 13 ou 14, **caractérisé en ce que** la hauteur du cône extérieur tronconique (40) est égale à au plus 40%, et de préférence 10 à 30% du diamètre de la face de guidage (62).

16. Dispositif selon l'une des revendications 1 à 15, **caractérisé en ce que** l'un des deux organes de maintien, qui est de préférence réalisé sous forme de vis de butée (34), présente un cône intérieur tronconique (42) dont la hauteur est égale à au plus 30%, et de préférence 10 à 25% de son diamètre de filetage.

17. Dispositif selon l'une des revendications 1 à 16, **caractérisé en ce que** l'un des deux organes de maintien, qui est de préférence réalisé sous forme de vis de butée (34), présente un cône intérieur tronconique (42) dont le diamètre de base est égal à au moins 70%, et de préférence 75 à 90% de son diamètre extérieur ou diamètre de filetage.

18. Dispositif selon l'une des revendications 1 à 17, **caractérisé en ce que** l'un des deux organes de maintien, qui est de préférence réalisé sous forme de vis de commande (36), présente un cône extérieur tronconique (46) dont la hauteur est égale à au plus 40%, et de préférence 10 à 30% de son diamètre extérieur ou diamètre de filetage.

19. Dispositif selon la revendication 18, **caractérisé en ce que** le diamètre de troncature de l'organe de maintien réalisé sous forme de vis de commande (36) est égal à au moins 40%, et de préférence 50 à 60% du diamètre extérieur ou diamètre de filetage.

20. Dispositif selon l'une des revendications 1 à 19, **caractérisé en ce que** la goupille de serrage (28) présente un cône extérieur tronconique (40) dépassant du côté frontal, dont le diamètre de troncature correspond à au moins 0,4 fois le diamètre de base associé.

21. Dispositif selon la revendication 20, **caractérisé en ce que** le diamètre de troncature du cône extérieur (40) formé sur la goupille de serrage (28) correspond à 0,6 à 0,9 fois le diamètre de base associé.

22. Dispositif selon l'une des revendications 1 à 21, **caractérisé en ce que** la goupille de serrage (28) présente au moins un cône intérieur tronconique (44) disposé sur le côté frontal, dont le diamètre de troncature correspond à au moins 0,5 fois, et de préférence 0,6 à 0,8 fois le diamètre de base associé.

23. Dispositif selon l'une des revendications 1 à 22, **caractérisé en ce que** l'un des organes de maintien, réalisé de préférence sous forme de vis de butée (34), présente un cône intérieur tronconique (42) dont le diamètre de troncature correspond à au moins 0,6 fois, et de préférence 0,7 à 0,95 fois le diamètre de base associé.

24. Dispositif selon l'une des revendications 1 à 23, **caractérisé en ce que** l'un des organes de maintien, réalisé de préférence sous forme de vis de commande (36), présente un cône extérieur tronconique (46) dont le diamètre de troncature correspond à au moins 0,4 fois, et de préférence 0,5 à 0,8 fois le diamètre de base associé.
